(19) Europäisches Patentamt
European Patent Office
Office européen des brevets

(11) Veröffentlichungsnummer: **0 090 390**
**B1**

(12) # EUROPÄISCHE PATENTSCHRIFT

(45) Veröffentlichungstag der Patentschrift: **19.07.89**

(51) Int. Cl.$^4$: **C 22 B 47/00**, C 01 G 45/10

(21) Anmeldenummer: **83103038.2**

(22) Anmeldetag: **26.03.83**

(54) **Verfahren zum Aufschluss von Manganerzen mittels Schwefeldioxid.**

(30) Priorität: **30.03.82 DE 3211658**

(43) Veröffentlichungstag der Anmeldung: **05.10.83 Patentblatt 83/40**

(45) Bekanntmachung des Hinweises auf die Patenterteilung: **19.07.89 Patentblatt 89/29**

(84) Benannte Vertragsstaaten: **BE DE FR GB IT LU NL**

(56) Entgegenhaltungen:
**DE-B- 2 150 785**
**DE-C- 588 787**
**DE-C- 688 564**
**US-A- 3 869 360**

(73) Patentinhaber: **Grillo-Werke AG**
**Weseler Strasse 1**
**D-4100 Duisburg-Hamborn (DE)**

(72) Erfinder: **Driemel, Klaus, Dipl.-Ing.**
**Am langen Bongert 3**
**D-4100 Duisburg 25 (DE)**
Erfinder: **Rohe, Dieter, Dr. Dipl.-Chem.**
**Marthastrasse 36**
**D-4220 Dinslaken (DE)**
Erfinder: **Lowicki, Norbert, Dr. Dipl.-Chem.**
**Walramsweg 26**
**D-4100 Duisburg 1 (DE)**

(74) Vertreter: **Werner, Hans-Karsten, Dr. et al**
**Deichmannhaus am Hauptbahnhof**
**D-5000 Köln 1 (DE)**

**EP 0 090 390 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein Verfahren zum Aufschluß von Braunstein-haltigen Manganerzen in wässriger Suspension mittels Schwefeldioxid und Luft.

Braunstein ist das am häufigsten vorkommende Mangan-Mineral und somit wichtigster Rohstoff für die Gewinnung von Mangansalzen. Zu den wichtigsten Mangansalzen gehört das Mangansulfat, welches Ausgangsmaterial zum Beispiel für Pigmente, Trockenstoffe, Elektrolyt-Braunstein und Fungizide ist. Weiterhin wird Mangansulfat selbst als Zusatz zu Dünger und Futtermitteln sowie die Glasherstellung verwendet.

In all diesen Fällen ist eine hohe Reinheit des Mangansulfats für die Qualität der Folgeprodukte von besonderer Wichtigkeit. Insbesondere Eisen muß bis auf einen sehr geringen Gehalt entfernt werden. Dementsprechend ist es erforderlich, entweder von entsprechend reinen und somit teueren Rohstoffen auszugehen oder aber im Falle der Verwendung von Braunstein-Erzen als Rohstoff ein Aufschlußverfahren zu benutzten, das von vornherein möglichst selektiv nur das Mangan in Lösung bringt und das Eisen im Rückstand beläßt.

Bei allen Aufschlußverfahren ist zu berücksichtigen, daß zunächst eine Reduktion des Mangan-IV zum Mangan-II der eigentlichen Salzbildung vorangehen muß.

Für die technische Reduktion werden z. B. Kohle oder Öl in einer thermischen Vorbehandlung des Erzes mit anschließender Laugung eingesetzt. Bei einer direkten Laugung der Erze mit Schwefelsäure wird z. B. auch elementarer Wasserstoff als Reduktionsmittel verwendet. Es ist weiterhin bekannt, eine direkte Erzlaugung mit Röst- bzw. Schwefelverbrennunggas durchzuführen, wobei das Schwefeldioxid unter Oxidation zu Sulfationen zugleich das Mangan-IV zum Mangan-II reduziert. Derartige Aufschlußverfahren benützen normalerweise Rührwerksreaktoren, die mit einer wässrigen Suspension von fein gemahlenem Braunstein bzw. Pyrolusit gefüllt sind. In die Suspension wird unterhalb des Rührers Röst- bzw. Schwefelverbrennungsgas mit einem Schwefeldioxidgehalt bis zu 17 % eingeblasen. Ein weiterer Zusatz von Schwefelsäure ist nicht erforderlich, es entsteht sogar ein Überschuß von freier Schwefelsäure.

Die Reaktion im Reaktor erfolgt prinzipiell nach dem Schema der Summengleichung :

$$MnO_2 + SO_2 = MnSO_4$$

Infolge der Säurebindung durch basische Erzbestandteile wie z. B. Kaliumoxid (bzw. Kaliumcarbonat), vor allem aber durch die Bildung von überschüssiger Schwefelsäure sowie durch $SO_2$-Verluste in den Abgasen ergibt sich ein Gesamtschwefelverbrauch, der bei ca. 110 % der theroretisch für die Mangansulfatbildung erforderlichen Menge liegt. Die entstehende freie Schwefelsäure löst Eisen aus dem Erz, das nach dem Aufschluß mittels Kalkzusatz durch Anheben des pH-Wertes oberhalb 4 wieder ausgefällt werden muß. Die Manganausbringung erreicht bei dieser Arbeitsweise in der Regel nur 87 bis 90 %.

Die Verwendung von Schwefelverbrennungs- oder Röstgas ist mit einer Reihe von Nachteilen verbunden. Insbesondere sind Pyritröstgase wegen ihrer relativ niedrigen $SO_2$-Konzentration von ca. 10 bis maximal 13 % und wegen meist ungenügender Reinheit besonders ungünstig und werden deshalb in der Praxis nicht mehr eingesetzt. Großtechnisch verwendet wird nach wie vor Schwefelverbrennungsgas, das zum Aufschluß von Pyrolusit verwendet wird. Derartige Schwefelverbrennungsgase enthalten normalerweise $SO_2$-Konzentrationen von 15 bis 17 % und sind praktisch staubfrei. Ein prinzipieller Nachteil der Verwendung von derartigen Gasen liegt darin, daß die Hauptmenge des in den Reaktor eingeblasenen Gases ein Inertgas ist, das den Reaktor auch wieder verlassen muß. Bevor es in die Atmosphäre treten darf, muß es von mitgerissenen Brüden und Restgehalten an Schwefeldioxid gereinigt werden. Umweltbelastungen, teilweise sogar erheblicher Art, lassen sich auch bei guter Waschung der Reaktorabgase vor allem zu Beginn und gegen Ende der Reaktion nicht mit Sicherheit vermeiden. Erschwerend kommt hinzu, daß die $SO_2$-Gaslieferung beim An- oder Abstellen eines Schwefelbrenners nicht sofort einsetzt bzw. sofort wieder aufhört. In der Praxis ist es daher erforderlich, mehrere Reaktoren in Serie zu schalten. Trotzdem sind in der Praxis Komplikationen nicht zu vermeiden. Ein weiterer Nachteil dieser Arbeitsweise ist, daß die Reaktionszeiten zwischen 12 und 18 Std. betragen. Diese langen Reaktionszeiten sind kostspielig und schwierig in der Überwachung.

Ein weiterer Nachteil dieses Verfahren besteht darin, daß bei der Verbrennung von Schwefel zwangsläufig auch in geringen Mengen Schwefeltrioxid (0,2 bis 2 g/m$^3$) sowie Stickoxide in Mengen zwischen 200 und 600 mg/m$^3$ entstehen. Beide Gasverunreinigungen sind bei ihrer Verwendung als Aufschlußmittel für Pyrolusit unerwünscht. Sie lassen durch Auswaschen etc. nur unvollständig entfernen.

Theoretisch wäre es auch denkbar, Braunstein-haltige Manganerze mit reinem Schwefeldioxid aufzuschließen. Entsprechende Versuche der Anmelderin haben jedoch gezeigt, daß dies nicht zu den gewünschten günstigeren Ergebnissen führt. Setzt man nämlich Braunsteinerze, z. B. einen Pyrolusitaufschluß, mit reinem Schwefeldioxid um, so findet man einen wesentlich höheren Verbrauch an Schwefel als nach dem Stand der Technik. Der Schwefelverbrauch liegt bei 150 % der Theorie im Vergleich zu

durchschnittlich 110 % bei den in der Praxis üblichen Arbeitsweisen mit Schwefelverbrennungsgasen.

Bei der Verwendung von reinem Schwefeldioxid sinkt ausserdem der pH-Wert der Lösung auf Werte von etwa 3 ab. Bei diesem pH werden erhebliche Mengen Eisensalz mit gelöst, was keinesfalls erwünscht ist.

Dies wird bestätigt durch die US-A-3869360, in der ein Verfahren zum Aufschluß von Manganknollen beschrieben ist, bei dem unter Einleiten von $SO_2$ und Luft aufgeschlossen wird. Der pH-Wert soll dabei maximal 4,0 vorzugsweise 2, betragen. Um eine oxidierende Atmosphäre zu schaffen, wird stets Sauerstoffüberschuß zum Schwefeldioxid eingeleitet ; vgl. Spalte 5, Zeilen 42 bis 46.

Eine genauere Untersuchung der Aufschlußreaktionen führte zu dem überraschenden Ergebnis, daß eine Reihe von Ansichten hierüber falsch und unvollkommen waren und daher nicht geeignet waren, die wirklichen Zusammenhänge zu erkennen.

So ist man bisher davon ausgegangen, daß die Bildung von Mangandithionat nach der Formel $MnO_2 + 2\ SO_2 = MnS_2O_6$ reversibel ist und in Gegenwart von Sauerstoff bei 90 bis 100 °C unter Zersetzung des Dithionats zur Bildung von Mangansulfat und Schwefelsäure, bzw. ggf. auch zur Bildung von elementarem Schwefel führt. Es wurde jetzt gefunden, daß dies nicht zutrifft, sondern daß einmal gebildete Dithionat unter den Aufschlußbedingungen praktisch unzersetzt erhalten bleibt. Die Bildung des Dithionats wurde somit als eine Folge von Nebenreaktionen erkannt, die sich durch die Einhaltung der erfindungsgemäßen Partialdruckverhältnisse direkt beeinflussen lassen. Weiterhin wurde gefunden, daß die Startreaktionen zwischen Mangandioxid und Schwefeldioxid zunächst überwiegend zur Bildung von Schwefelverbindungen des dreiwertigen Mangans führt, wobei auch der Schwefel nur teilweise vom vierwertigen in den sechswertigen Zustand überführt wird. Das dabei zunächst gebildete Mangan-III-Sulfit zerfällt spontan unter Bildung von Mangan-II-Sulfit und Mangandithionat. Weiterhin reagiert Mangan-III-Sulfat mit Mangan-II-Sulfit ebenfalls unter Bildung von Mangandithionat. Diese unerwünschten Mehrstufenreaktionen sind direkt vom Partialdruckverhältnis Schwefeldioxid/Sauerstoff abhängig und können somit durch Einhaltung der erfindungsgemäßen Partialdruckverhältnisse gesteuert werden. Weiterhin wurde gefunden, daß durch Einhaltung dieser Partialdruckverhältnisse auch der pH-Wert leicht und exakt gesteuert werden kann.

Im einzelnen kann das Reaktionsgeschehen wie folgt beschrieben werden :

Die Startreaktion zwischen Mangandioxid und $SO_2$ führt zunächst überwiegend zur Bildung von Schwefelverbindungen des dreiwertigen Mangans, wobei auch der Schwefel nur teilweise vom vierwertigen in den sechswertigen Zustand überführt wird. Diese Startreaktion beschreibt die folgende Gleichung 1 :

$$7\ MnO_2 + 9\ SO_2 = Mn_2(SO_3)_3 + Mn_2(SO_4)_3 + MnSO_3 + 2\ MnSO_4 \quad (1)$$

Das Mangan-III-Sulfit zerfällt unter Bildung von Mangan-II-Sulfit und Mangandithionat :

$$Mn_2(SO_3)_3 = MnSO_3 + MnS_2O_6 \quad (2)$$

Mangan-III-Sulfat reagiert mit Mangan-II-Sulfit weiter nach der Gleichung

$$Mn_2(SO_4)_3 + 2\ MnSO_3 = 3\ MnSO_4 + MnS_2O_6 \quad (3)$$

Hierbei — durch die Reaktionen nach den vorstehenden Gleichungen (2) und (3) — entsteht das unerwünschte Dithionat. Setzt man jedoch dem Reaktionsgemisch bestimmte Mengen Sauerstoff durch Einblasen von Luft zu, so werden die Reaktionsabläufe nach den genannten Gleichungen (2) und (3) unterbunden und an ihrer Stelle reagiert Mangan-II-Sulfit nach der Gleichung 4 :

$$MnSO_3 + MnO_2 + SO_2 + 1/2\ O_2 = 2\ MnSO_4 \quad (4)$$

unter Bildung von Mangansulfat und wird so der Dithionatbildung nach Gleichung (3) entzogen. Infolge Mangels an Mangan-II-Sulfit reagiert dann das Mangan-III-Sulfat mit Mangan-III-Sulfit nach der folgenden Gleichung 5 :

$$Mn_2(SO_4)_3 + Mn_2(SO_3)_3 + MnO_2 + H_2O = 5\ MnSO_4 + H_2SO_4 \quad (5)$$

Die hierdurch entstehende freie Schwefelsäure ist erforderlich, um den Ausgangs-pH-Wert der Braunsteinsuspension von ursprünglich 7,5-7,9 auf den zum Aufschluß des Erzes günstigen Bereich um 4,2 zu senken. Wird der Sauerstoffzusatz jedoch erhöht, so wird Mangan-III-Sulfit der Reaktion nach Gleichung (5) entzogen und reagiert nach Gleichung 6 :

$$Mn_2(SO_3)_3 + O_2 + H_2O = 2\ MnSO_4 + H_2SO_4 \quad (6)$$

unter Bildung weiterer freier Schwefelsäure. Der Mangel an Mangan-III-Sulfit kann wiederum Anlaß für eine Umleitung der Reaktion des Mangan-III-Sulfats sein, das dann unter Bildung zusätzlicher freier

Schwefelsäure wie folgt reagiert :

$$Mn_2(SO_4)_3 + SO_2 + 2\ H_2O = 2\ MnSO_4 + 2\ H_2SO_4. \quad (7)$$

Hierdurch erklärt sich das Absinken des pH-Wertes bei Zusatz großer Mengen Luft bzw. die Unmöglichkeit einer sicheren pH-Steuerung, wenn für den Pyrolusitaufschluß Röst- oder Schwefelverbrennungsgas verwendet wird.

Die Entdeckung dieser Zusammenhänge hat die Möglichkeit aufgezeigt, ein neues, einfaches, kostengünstiges umweltfreundliches leicht steuerbares Verfahren zum Aufschluß von Braunstein-haltigen Manganerzen zu entwickeln.

Gegenstand der Erfindung ist somit ein Verfahren zum Aufschluß von Braunstein-haltigen Manganerzen in wässriger Suspension mittels reinem Schwefeldioxid und Luft, das dadurch gekennzeichnet ist, daß man das Schwefeldioxid so einspeist und die Luftzufuhr so regelt, daß ein Partialdruckverhältnis $pSO_2$ zu $pO_2$ von 4 bis 14, und ein pH-Wert von höher als 4, eingehalten wird.

Vorzugsweise beträgt das Partialdruckverhältnis $pSO_2$ zu $pO_2$ 8 bis 12. Vorzugsweise wird ein pH-Wert von höher als 4,2 eingehalten.

Die Einspeisung des reinen $SO_2$ erfolgt in besonders einfacher Weise durch Verwendung von flüssigem Schwefeldioxid. Flüssiges Schwefeldioxid kann in Tanks gelagert und aus diesen Verbrauchsstellen direkt oder nach vorheriger Verdampfung entnommen und dem Verfahren zugeführt werden. In jedem Falle ist die einzusetzende Menge Schwefeldioxid exakt meß- und steuerbar, so daß die oben aufgezeigten üblichen Schwierigkeiten bei der Prozeßführung vollständig entfallen.

Weiterhin entfallen bei dem erfindungsgemäßen Verfahren die großen Inertgasmengen mit einem Restgehalt an Schwefeldioxid und die dadurch bedingten Umweltbelästigungen. Durch die Vermeidung unnötiger Schwefelverluste arbeitet das erfindungsgemäße Verfahren kostengünstiger, zumal die hohen Investitionen für die Schwefelverbrennung, die Gaskühlung und Reinigung entfallen. Dies gilt auch für den Aufwand für die Verdichtung der großen Inertgasmengen.

Ein weiterer überraschender Vorteil des erfindungsgemäßen Verfahrens besteht darin, daß man mit erheblich höheren Feststoffgehalten der Erzsuspension arbeiten kann als bei Verwendung von Schwefelverbrennungsgas, welches nur 15 bis 17 % $SO_2$ enthält. So ist es erfindungsgemäß möglich, den Feststoffgehalt von bisher maximal 180 g/l auf Feststoffgehalte von 400 g/l zu erhöhen und trotzdem einwandfreie Ergebnisse zu erzielen. Ein weiterer besonderer Vorteil des erfindungsgemäßen Verfahrens besteht darin, daß es möglich ist, durch Messung des pH-Wertes die Zufuhr von Luft zu steuern und dadurch das gewünschte Partialdruckverhältnis $pSO_2 : pO_2$ einzuhalten. Dies ist für die technische Durchführbarkeit des erfindungsgemäßen Verfahrens von größter Bedeutung und ein weiterer wichtiger Faktor für die Wirtschaftlichkeit des gesamten Verfahrens.

Erfindungsgemäß sollte nämlich der pH-Wert höher als 4, vorzugsweise höher als 4,2, liegen. Besonders gute Ergebnisse erhält man bei pH-Bereichen von 4,2 bis 4,6. Ab einem pH-Wert von 4,2 geht praktisch kein Eisen mehr in Lösung. Weiterhin sinkt der Schwefeldioxidverbrauch auf Werte deutlich unter 110 % des theoretischen Schwefelbedarfs. Dieser Mehrbedarf wird praktisch nur noch durch basische Verunreinigungen des Erzes bewirkt, nicht jedoch mehr durch die Dithionatbildung. Durch die jetzt durchgeführten Untersuchungen wurde gefunden, daß bei den herkömmlichen Verfahren mit Schwefelverbrennungsgasen stets Dithionate in Mengen zwischen 2 und 5 % gebildet werden und diese nicht wieder zerfallen.

Während der Zusatz zu geringer Sauerstoffmengen zur unerwünschten Bildung von Dithionat führt, führen zu große Sauerstoffmengen zur Bildung von freier Schwefelsäure, so daß die pH-Werte unter 4, ggf. sogar unter 1 absinken. In dem erfindungsgemäßen Bereich der Partialdrücke von Sauerstoff gelingt es hingegen, das zunächst gebildete Mangan-II-Sulfit aus dem Gleichgewicht zu entfernen und damit die Dithionatbildung zu unterdrücken. Wird mehr Sauerstoff zugeführt als für die optimale Prozeßführung erforderlich ist, sinkt der pH-Wert zu stark ab und es kommt zu den unerwünschten gleichzeitigen Aufschlüssen von Eisenerzanteilen.

Erfindungsgemäß ist es somit möglich, bei einem geringstmöglichen Schwefeldioxidverbrauch die Manganausbringung auf 90 bis 95 % zu steigern und hierbei nur minimale Verunreinigungen an Eisen aus dem Erz in die resultierende Mangansulfatlösung zu bringen. Dies alles wiederum erfolgt unter Bedingungen, die nicht nur am Anfang und am Ende des Verfahrens, sondern auch während der Prozeßführung wesentlich umweltfreundlicher sind als die Verfahren nach dem Stand der Technik. Schließlich ist es möglich, die Aufschlußmengen pro Zeit- und Raumeinheit praktisch zu verdoppeln, wodurch sich die Wirtschaftlichkeit des Verfahrens erheblich erhöht.

Das erfindungsgemäße Verfahren wird in den nachfolgenden Beispielen und Vergleichsversuchen näher erläutert.

Vergleichsversuch 1

In einem 35 $m^3$ Rühr-Reaktor wurden 29,7 $m^3$ Braunsteinerz-Suspension mit einem Feststoffgehalt von 180 g/l (Aufmahlungsgrad des Braunsteins 40 µm) eingesetzt. Unterhalb des Rührers wurde ein Schwefelverbrennungsgas mit 16 Vol. % $SO_2$, 3,7 % $O_2$ und 80,2 % $N_2$ eingeblasen. Die Temperatur der

Suspension betrag bei Reaktionsbeginn 36 °C und stieg innerhalb von 3 Stunden auf 70 °C, nach 6 Stunden auf 80 °C an. Der pH-Wert sank nach 3 Std. auf 3, nach 9 Std. auf 2,1 ab. Die Gaszuführung wurde nach 10 Std. abgestellt und dann noch 2 Std. gerührt, um die Reaktion zu Ende zu bringen. Der End-pH der Lösung lag bei 2,2, der Mangangehalt betrug 70 g/l, der Eisengehalt 65 mg/l. Die Ausbeute an Mangan betrug 89 %, der Schwefeleinsatz 111 % der Theorie.

Vergleichsversuch 2

In einer 50 l Glasapparatur wurde die großtechnische Arbeitsweise wiederholt. Es wurden 54,5 kg Braunstein-Suspension mit einem Feststoffgehalt von 180 g/l eingesetzt und mit einem synthetischen Schwefelverbrennungsgas mit einem Gehalt von 15,6 % $SO_2$, 4 % $O_2$ und 80,4 % $N_2$ versetzt. Die Temperatur der Reaktionslösung stieg von 30 °C auf 85 °C innerhalb von 3 Std. Dabei sank der pH auf 2,8, nach 9 Std. erreichte er 2,0. Danach wurde der Gaszusatz beendet und noch 2 Std. weitergerührt, um die Reaktion zum Abschluß zu bringen. Die Lösung enthielt 72 g/l Mangan und 58 mg/l Eisen ; die Ausbeute lag bei 89,3 % bezogen auf eingesetztes Mangan.

Vergleichsversuch 3

In der 50 l Glasapparatur wurden 52,1 kg Pyrolusit-Suspension mit 240 g Feststoff/l mit 100 %igem Schwefeldioxid versetzt. Die Reaktion dauerte 8 Std. Der Ausgangs-pH von 7,9 fiel auf pH 3 ab, die Temperatur stieg von 28 auf 102 °C an. Die insgesamt verbrauchte $SO_2$-Menge entsprach 147 % der theoretisch erforderlichen. Die resultierende Lösung enthielt 106 g/l Mangan und 124 mg/l Eisen. Die Manganausbeute betrug 94 %.

Beispiel 1

In der 50 l Glasapparatur wurde wie beim Vergleichsversuch 1 und 2 durch eine Ringbrause unterhalb des Rührers ein Gemisch von 100 %igem $SO_2$ in 60,2 kg Pyrolusit-Suspension mit 194 g/l Feststoff eingeblasen. Die Luftmenge wurde so eingestellt, daß ein Partialdruckverhältnis $pSO_2 : pO_2$ zwischen 8,1 und 8,5 konstant blieb. Die Temperatur der Flüssigkeit stieg innerhalb von 2 1/2 Std. von 35 auf 95 °C und erreichte nach 6 Std. 100 °C. Der pH-Wert der Lösung sank von anfänglich 7,8 auf 4,5 innerhalb von 1 1/2 Std. und hielt sich dann zwischen 4,3 und 4,6 nahezu konstant. Die Begasung der Reaktionslösung wurde nach 7,5 Std. eingestellt und noch 2 Std. gerührt. Die resultierende Lösung enthielt bei einem End-pH von 4,8 96 g/l Mn und 0,7 mg/l Fe. Der Schwefelverbrauch belief sich auf 108 % der Theorie, das Manganausbringen 95 %.

Beispiel 2

In der 50 l Glasapparatur wurden 60,2 kg Braunsteinerz-Suspension mit 230 g/l Feststoff wie bei Beispiel 1 mit einem Gemisch von 100 %igem $SO_2$ und Luft versetzt. Das Partialdruckverhältnis $pSO_2 : pO_2$ wurde auf 10 eingestellt und nahezu konstant gehalten. Der pH-Wert sank von anfänglich 7,8 innerhalb von 2 Std. auf 4,5, die Temperatur stieg von 15 auf rund 100 °C an. Die Reaktion war nach 7 Std. praktisch beendet. Es wurde noch eine Std. nachreagieren gelassen. Die resultierende Lösung hatte einen End-pH von 5,6, der Mangangehalt der Lösung betrug 102 g/l, der Eisengehalt 0,5 mg/l. Die Ausbeute an Mangan betrug 95,7 %, der Schwefelverbrauch 106 % der Theorie.

Vergleichsversuch 4

In der 50 l Glasapparatur wurden 57,4 kg Braunsteinerz-Suspension mit 210 g Feststoff/l mit einem Gemisch von 100 %igem $SO_2$ und Luft begast. Hierbei wurde das Partialdruckverhältnis $pSO_2 : pO_2$ auf 1,1 bis 1,5 eingestellt. Der pH-Wert der Reaktionslösung fiel von anfänglich 7,9 innerhalb von 3 Std. auf 2,5 und bis zum Ende der Reaktion nach etwa 8 Std. auf 1 ab. Die Temperatur der Lösung stieg dabei von 15 auf 96 °C an. Nach dem Abstellen der Begasung wurde noch eine Stunde zur Nachreaktion gerührt. Das Filtrat enthielt nur 51,8 g/l Mn, 159 mg/l Fe ; die Ausbeute an Mangan belief sich auf nur 72 %, der Schwefelverbrauch lag bei 112 % der Theorie.

Beispiel 3

In einem 35 $m^3$ Rührreaktor, entsprechend Vergleichsversuch 1, wurden 29 $m^3$ Manganerz-Suspension mit 240 g/l Feststoff mit 100 %igem $SO_2$ aufgeschlossen. Dem Schwefeldioxid wurde Luft zugesetzt, so daß ein Partialdruckverhältnis $pSO_2 : pO_2$ zwischen 9,6 und 11,5 eingehalten wurde. Der Ausgangs-pH von 7,6 fiel innerhalb von 2 Std. auf 4,3 und hielt sich zwischen 4,1 und 4,5 nahezu konstant. Die Reaktionstemperatur der Lösung stieg von 20 auf 90 °C an und wurde auf dieser Höhe durch Kühlung gehalten. Die Gesamtdauer der Reaktion betrug 12 Std. Die Lösung enthielt nach beendeter Reaktion

29,4 % $MnSC_4$ und 1,0 mg Fe. Die Manganausbeute belief sich auf 93,3 %, der $SO_2$-Verbrauch lag bei 108 % der Theorie.

Beispiel 4

In dem 35 $m^3$ Rührreaktor wie bei Beispiel 3 wurden 27 $m^3$ Suspension mit 180 g/l Feststoff mit 100 %igem Schwefeldioxid und Luft aufgeschlossen. Zur Abkürzung der Reaktionszeit wurde die Rührgeschwindigkeit erhöht, so daß über den Rührer Luft in die Lösung eingesaugt wurde. Die zusätzlich mit dem $SO_2$ eingeblasene Luftmenge wurde daraufhin so weit gesenkt, daß der pH-Wert der Lösung sich auf etwa 4,2 bis 4,5 konstant hielt. Die Abhängigkeit des pH-Wertes vom Partialdruckverhältnis $pSO_2 : pO_2$ ist demnach so eindeutig, daß die Einstellung des letzteren durch eine einfache pH-Messung erfolgen kann. Die Gesamtdauer der Reaktion belief sich auf 8,5 Std., der Mangansulfatgehalt des Filtrats lag bei 30,5 %, der Eisengehalt betrug 2,5 mg/l. Die Ausbeute an Mangan erreichte 93,8 %.

In der Vergleichsversuchen 1 und 2 sind die entweichenden Brüden stark $SO_2$-haltig. Bei der Arbeitsweise durch Einblasung von 100 %igem $SO_2$ mit Luft ist in keinem Falle ein Austritt von $SO_2$ in den Gasraum oberhalt der Flüssigkeit festzustellen.

Beispiel 5

In einer 100 l-Glasapparatur wurden 42 l Mangansuspension mit 395 g Feststoff/l mit einem Gemisch von 100 %igem $SO_2$ und Luft begast. Das Partialdruckverhältnis $pSO_2 : pO_2$ wurde auf 9 bis 10 eingestellt; der pH-Wert sank von anfänglich 8 innerhalb von 3 Std. auf 4,2. Die Temperatur stieg von 15 auf 98 bis 100 °C an. Nach 12 Stunden war die Reaktion praktisch beendet. Es wurde noch eine Stunde nachreagieren gelassen und dabei das Gesamtvolumen der Lösung auf ca. 70 l erhöht, um dicht unterhalb der Sättigungskonzentration des gebildeten Mangansulfats zu bleiben. Die resultierende Lösung hatte einen pH von ca. 5, der Mangangehalt lag bei 114,2 g/l entsprechend 30,5 % $MnSO_4$, der Eisengehalt betrug 0,8 mg/l, die Ausbeute an Mangan lag bei 95,3 %, der Schwefelverbrauch belief sich auf 108 % der Theorie.

## Patentansprüche

1. Verfahren zum Aufschluß von Braunstein-haltigen Manganerzen in wässriger Suspension mittels reinem Schwefeldioxid und Luft, dadurch gekennzeichnet, daß man das Schwefeldioxid so einspeist und die Luftzufuhr so regelt, daß ein Partialdruckverhältnis $pSO_2 : pO_2$ von 4 bis 14, und ein pH-Wert von höher als 4 eingehalten wird.

2. Verfahren gemäß Anspruch 1, dadurch gekennzeichnet, daß das Partialdruckverhältnis von $pSO_2 : pO_2$ 8 bis 12 beträgt.

3. Verfahren gemäß Anspruch 1 oder 2, dadurch gekennzeichnet, daß der pH-Wert höher als 4,2 eingehalten wird.

4. Verfahren gemäß einem der Ansprüche 1 bis 3, dadurch gekennzeichnet, daß das Schwefeldioxid in Form von flüssigem Schwefeldioxid eingespeist wird.

5. Verfahren gemäß einem der Ansprüche 1 bis 4, dadurch gekennzeichnet, daß die Steuerung des Partialdruckverhältnisses $pSO_2 : pO_2$ durch Messung des pH-Wertes erfolgt.

## Claims

1. A process for developing manganese dioxide ores by treating same with pure sulphur dioxide and air in an aqueous suspension, characterized in that the sulphur dioxide is supplied and the air supply is controlled so that a partial pressure ratio of $pSO_2 : pO_2$ of from 4 to 14 and a pH value higher than 4 are maintained.

2. The process according to claim 1, characterized in that the partial pressure ratio of $pSO_2 : pO_2$ is from 8 to 12.

3. The process according to claims 1 or 2, characterized in that the pH value maintained is higher than 4.2.

4. The process according to any one of claims 1 to 3, characterized in that the sulphur dioxide is supplied in the form of liquid sulphur dioxide.

5. The process according to any one of claims 1 to 4, characterized in that the control of the partial pressure ratio of $pSO_2 : pO_2$ is effected by measurement of the pH value.

## Revendications

1. Procédé d'attaque de minerais de manganèse contenant du bioxyde de manganèse dans une suspension aqueuse au moyen de bioxyde de soufre pur et d'air, caractérisé en ce que le bioxyde de

soufre est introduit et l'amenée d'air est réglée de façon à maintenir un rapport de pressions partielles $pSO_2 : pO_2$ de 4 à 14, et une valeur de pH supérieure à 4.

2. Procédé selon la revendication 1, caractérisé en ce que le rapport de pressions partielles de $pSO_2 : pO_2$ est de 8 à 12.

3. Procédé selon la revendication 1 ou 2, caractérisé en ce que la valeur de pH est maintenue supérieure à 4,2.

4. Procédé selon l'une des revendications 1 à 3, caractérisé en ce que le bioxyde de soufre est introduit sous forme de bioxyde de soufre liquide.

5. Procédé selon l'une des revendications 1 à 4, caractérisé en ce que la commande du rapport des pressions partielles $pSO_2 : pO_2$ est réalisée par mesure de la valeur du pH.